# EUROPÄISCHE PATENTSCHRIFT

(11) **EP 2 781 653 B1**
(45) Veröffentlichungstag und Bekanntmachung des Hinweises auf die Patenterteilung: **04.03.2015**
(21) Anmeldenummer: 13159662.9
(22) Anmeldetag: 18.03.2013
(51) Int. Cl.: D21H 23/70, D21H 23/72, D21H 23/74, D21H 27/00, D21H 27/18, D21F 9/00, D21F 11/00, B65H 35/02, B26D 7/18, B26D 1/24, B26D 5/00, B26D 7/26, B23K 26/08, B23K 26/40, B26D 9/00, B23K 26/38

(54) **Vorrichtung und Verfahren zur Konfektionierung von beschichteten Dekorpapierbahnabschnitten und Verwendung einer Vorrichtung**
Device and method for packing coated decorative paper sheet sections and use of such a device
Dispositif et procédé de fabrication de bandes de papier décoratif enduites et utilisation d'un tel dispositif

(43) Veröffentlichungstag der Anmeldung: 24.09.2014
(73) Patentinhaber: SÜDDEKOR GmbH, 89150 Laichingen (DE)
(72) Erfinder: Zinnäcker, Knut, 72589 Westerheim (DE)
(74) Vertreter: Vötsch, Reiner

(56) Entgegenhaltungen:
- EP-A2- 0 236 275
- EP-A2- 1 020 560
- WO-A1-2011/042047
- DE-A1-102010 052 044
- DE-U1- 20 220 537

## Beschreibung

### Stand der Technik

Die Erfindung betrifft eine Vorrichtung und ein Verfahren zur Konfektionierung von beschichteten Dekorpapierbahnabschnitten nach den Oberbegriffen der beiden unabhängigen Ansprüche. Ferner betrifft die Erfindung die Verwendung einer erfindungsgemäßen Vorrichtung zur Konfektionierung von beschichteten Dekorpapierbahnabschnitten.

Eine Vorrichtung sowie ein Verfahren nach den Oberbegriffen der beiden unabhängigen Ansprüche zur Konfektionierung von beschichteten Dekorpapierbahnabschnitten sind aus der Praxis bereits bekannt. Dabei wird eine endlose Papierbahn entlang einer Bearbeitungsstrecke gefördert, wobei die Papierbahn unterschiedliche Bearbeitungsstationen durchläuft. Diese unterschiedlichen Bearbeitungsstationen umfassen zumindest eine Einrichtung zum Aufbringen eines Dekors, insbesondere in Form eines Druckbildes, auf die Papierbahn, eine Imprägniereinrichtung zum Imprägnieren bzw. Beschichten des Druckbildes sowie eine Quertrenneinrichtung, mit der einzelne Dekorpapierbahnabschnitte definierter Länge von der Dekorpapierbahn abgetrennt werden. Wesentlich dabei ist, dass die entlang der Bearbeitungsstrecke angeordneten Einrichtungen (zum Beschichten und Imprägnieren sowie ggf. zusätzliche Einrichtungen) auf ein maximal zu verarbeitendes Format bezüglich der Breite der Papierbahn ausgelegt bzw. eingerichtet sind. Die bekannte Vorrichtung bzw. die Bearbeitungseinrichtungen sind zwar dafür auch vorgesehen bzw. geeignet, dass Papierbahnen mit einer gegenüber der maximalen Breite reduzierten Breite verarbeitet werden können, dabei wird jedoch in Kauf genommen, dass die jeweiligen Bearbeitungsstationen hinsichtlich ihres jeweiligen Wirkungsgrads nicht optimal arbeiten, bzw. es wird ein erhöhter Verbrauch von beispielsweise Imprägniermitteln in Kauf genommen, die nicht zur Imprägnierung der Papierbahn mit reduzierter Breite verwendet werden. Dies hat zur Folge, dass bezogen auf eine Papierbahn maximaler Breite die Herstellungskosten pro Fläche bei einer Papierbahn mit einer gegenüber der maximalen Breite reduzierten Breite erhöht sind. Dies ist umso stärker der Fall, desto schmäler die verarbeitete Papierbahn im Verhältnis zu der maximal zu verarbeitenden Breite einer Papierbahn ist.

Darüber hinaus ist es insbesondere auch üblich, dass zum Herstellen von Dekorpapierbahnabschnitten mit unterschiedlicher Breite die entsprechenden Aufträge auf der bekannten Vorrichtung nacheinander abgearbeitet werden, wobei jeweils ein Formatwechsel, d.h. ein Austausch der verwendeten Papierbahn (aufgrund der unterschiedlichen Breiten der benötigten Papierbahnen) erforderlich ist. Insbesondere, wenn die jeweiligen Losgrößen jeweils relativ gering sind, führt ein derartiges Vorgehen zu relativ hohen Handlingskosten sowie Stillstandszeiten an der Vorrichtung, die die Produktionskosten ebenfalls erhöhen.

### Offenbarung der Erfindung

Ausgehend von dem dargestellten Stand der Technik liegt der Erfindung die Aufgabe zugrunde, eine Vorrichtung sowie ein Verfahren zur Konfektionierung von beschichteten Dekorpapierbahnabschnitten nach den Oberbegriffen der beiden unabhängigen Ansprüche derart weiterzubilden, dass die Herstellungskosten von Dekorpapierbahnabschnitten, die gegenüber der Auslegungsbreite der Bearbeitungseinrichtungen eine reduzierte Breite aufweisen, gegenüber dem Stand der Technik verringert sind. Darüber hinaus sollen der Handlingsaufwand sowie die Stillstandszeiten bei der Verarbeitung unterschiedlicher Breiten von Papierbahnen reduziert werden.

Diese Aufgabe wird erfindungsgemäß bei einer Vorrichtung zur Konfektionierung von beschichteten Dekorpapierbahnabschnitten mit den Merkmalen des Anspruchs 1 dadurch gelöst, dass in Förderrichtung vor der wenigstens einen Quertrenneinrichtung wenigstens eine Längstrenneinrichtung zum Auftrennen der Dekorpapierbahn in wenigstens zwei endlose Dekorpapierlängsbahnen angeordnet ist, und dass wenigstens eine Umlenkeinrichtung vorgesehen ist, die die beiden Dekorpapierlängsbahnen zueinander beabstandet und jeweils einer separaten Quertrenneinrichtung zuführt.

Der Erfindung liegt mit anderen Worten gesagt die Idee zugrunde, eine möglichst breite Dekorpapierbahn auf den Bearbeitungseinrichtungen der Bearbeitungsstrecke zu verarbeiten, damit die Bearbeitungseinrichtungen entlang der Bearbeitungsstrecke stets in ihrem optimalen Wirkungsgrad bzw. in dem Bereich ihrer Auslegung bezüglich einer maximal zu verarbeitenden Breite der Dekorpapierbahn arbeiten können. Im weiteren Verlauf der Bearbeitungsstrecke wird eine derart mit einem Dekor versehene und imprägnierte Dekorpapierbahn anschließend in Längsrichtung in wenigstens zwei Dekorpapierlängsbahnen mittels einer Längstrenneinrichtung aufgetrennt, derart, dass von den entstehenden Dekorpapierlängsbahnen die Dekorpapierbahnabschnitte definierter Länge und Breite von jeweiligen Quertrenneinrichtungen abgetrennt werden können. Beispielhaft, und nicht einschränkend, sei zur Verdeutlichung ein Ausführungsbeispiel genannt, bei dem zwei Aufträge zur Konfektionierung von Dekorpapierbahnabschnitten vorhanden sind, wobei bei dem einen Auftrag eine Breite von 1,50m, und bei dem anderen Auftrag eine Breite von 1 m der Papierbahn erforderlich ist. Die Bearbeitungseinrichtungen an der Bearbeitungsstrecke seien beispielhaft auf eine maximale (Auslegungs-) Breite einer Papierbahn von 3m eingerichtet. Erfindungsgemäß kann somit auf der erfindungsgemäßen Vorrichtung beispielsweise eine Papierbahn der Breite von 2,5m verarbeitet werden, die mittels der Längstrenneinrichtung in die beiden gewünschten Formate von 1,5m Breite und 1 m Breite nach dem Dekorieren und Imprägnieren aufgetrennt wird. Die erfindungsgemäße Vorrichtung ermöglicht es somit, gleichzeitig zwei (unterschiedliche) Aufträge abzuarbeiten, was aufgrund der erforderlichen Stillstandszeit zum Austausch der beiden ansonsten verwendeten Papierbahnen von 1,5m Breite und 1m Breite nicht nur wesentlich schneller geht, sondern auch preiswerter, da die Bearbeitungseinrichtungen an der Bearbeitungsstrecke nur einmalig eine Papierbahn von 2,5m Breite bearbeiten müssen, während ansonsten der Durchlauf zweier Papierbahnen von 1,5m Breite und 1m Breite erforderlich wäre, wobei die Bearbeitungseinrichtungen beim Verarbeiten der jeweils in ihrer Breite gegenüber der Papierbahn von 2,5m schmäleren Papierbahnen in einem Bereich schlechteren Wirkungsgrades bzw. eines erhöhten Materialverbrauchs arbeiten.

Vorteilhafte Weiterbildungen der erfindungsgemäßen Vorrichtung zur Konfektionierung von beschichteten Dekorpapierbahnabschnitten sind in den Unteransprüchen aufgeführt.

In einer bevorzugten Ausgestaltung der erfindungsgemäßen Vorrichtung wird vorgeschlagen, dass die wenigstens eine Umlenkeinrichtung dazu eingerichtet ist, die wenigstens zwei Dekorpapierlängsbahnen zwischen der Längstrenneinrichtung und den Quertrenneinrichtungen parallel zueinander auszurichten. Dadurch wird eine bereits vorhandene Bearbeitungsstrecke lediglich hinsichtlich ihrer Breite, oder, bei einer übereinander angeordneten Dekorpapierlängsbahnen, hinsichtlich ihrer Höhe vergrößert, so dass üblicherweise bereits vorhandene Maschinenhallen ohne größere Umbauten bzw. ohne größeren Raumbedarf mit der erfindungsgemäßen Vorrichtung ausgestattet werden können. Hinsichtlich der Gesamtlänge einer derartigen Bearbeitungsanlage ist darüber hinaus zu berücksichtigen, dass die Gesamtlänge durch die gegenüber dem Stand der Technik zusätzlich erforderliche Einrichtung zum Längstrennen der Dekorpapierbahn um beispielsweise lediglich ca. 4m verlängert wird. Bei einer typischen Gesamtlänge einer derartigen Bearbeitungsanlage von 80m bis 100m ist ein derartiger zusätzlicher Raumbedarf üblicherweise ohne größere zusätzliche Kosten bezüglich der Infrastruktur in der Maschinenhalle realisierbar.

Um möglichst geringe Umlenkwinkel an einer Dekorpapierlängsbahn zu erzielen, und somit die Belastung an der Dekorpapierlängsbahn sowie den damit zusammenwirkenden Umlenkeinrichtungen zu reduzieren, ist es bevorzugt vorgesehen, dass zwei voneinander beabstandete Umlenkelemente vorgesehen sind, die eine Dekorpapierlängsbahn um jeweils ca. 40° bis 90°, vorzugsweise um 90° aus ihrer Förderrichtung umlenken. Eine derartige Ausbildung der Umlenkelemente ermöglicht eine parallele Anordnung der beiden Dekorpapierlängsbahnen, wenn bei zwei Dekorpapierlängsbahnen eine der beiden Dekorpapierlängsbahnen aus ihrer ursprünglichen Förderrichtung nicht ausgelenkt wird. Darüber hinaus ist durch eine Variation des Abstandes zwischen den beiden Umlenkelementen eine einfache Anpassung an unterschiedliche Abstände zwischen den beiden Dekorpapierlängsbahnen möglich.

In bevorzugter konstruktiver Ausgestaltung des Umlenkelements weist dieses eine gewölbt ausgebildete Führungsfläche für die Dekorpapierlängsbahn, insbesondere an einem in einer Achse starr angeordneten Umlenkzylinder auf, wobei im Bereich der Führungsfläche ein Luftpolster zum berührungslosen Umlenken der Dekorpapierlängsbahn ausgebildet ist. Insbesondere die Verwendung eines derartigen Luftpolsters, das eine direkte Anlage der Dekorpapierlängsbahn an der Führungsfläche vermeidet, ermöglicht eine relativ lange Haltbarkeit bzw. Standzeit des Umlenkelements, da durch die Beschichtung der Dekorpapierlängsbahn diese beispielsweise an ihrer Oberfläche verschleißfeste, harte Materialien wie Korund enthält, die ansonsten bei einem direkten Kontakt mit der Führungsfläche zu einem schnellen Verschleiß der Führungsfläche führen würde.

Zur Ausbildung des Luftpolsters, insbesondere bei Verwendung eines Umlenkzylinders, kann es vorgesehen sein, dass die Führungsfläche Durchbrüche zur Durchströmung mit unter Überdruck stehender Luft aufweist, die auf der Dekorpapierlängsbahn abgewandten Seite in Wirkverbindung mit einer Überdruckquelle angeordnet sind. Durch eine entsprechende Ausgestaltung der Durchbrüche bzw. deren Form lässt sich darüber hinaus beispielsweise eine Führung der Dekorpapierlängsbahn oder eine zusätzliche Kraft in Förderrichtung erzielen.

Ganz besonders bevorzugt ist darüber hinaus eine Ausgestaltung der erfindungsgemäßen Vorrichtung, bei der die wenigstens eine Längstrenneinrichtung und die wenigstens eine Umlenkeinrichtung in einer Richtung quer zur Längsrichtung der Dekorpapierbahn verstellbar angeordnet sind. Eine derartige Ausbildung ermöglicht es insbesondere, die Vorrichtung an unterschiedliche Breiten der Dekorpapierlängsbahnen anzupassen. Üblicherweise erfolgt eine derartige Einstellung durch elektromotorische, pneumatische oder hydraulische Hilfsmittel durch Dateneingabe an einer Bedieneinheit bzw. einem Bedienfeld. Dabei kann es insbesondere vorgesehen sein, dass die Längstrenneinrichtung und die wenigstens eine Umlenkeinrichtung miteinander (steuerungstechnisch) derart verbunden sind, dass eine automatische Verstellung der Umlenkeinrichtung in Abhängigkeit von der Position der Längstrenneinrichtung erfolgt.

Um bei einer kontinuierlich geförderten Dekorpapierbahn eine ebenfalls kontinuierliche Auftrennung in die wenigstens zwei Dekorpapierlängsbahnen zu erzielen, ist es bevorzugt vorgesehen, dass die Längstrenneinrichtung in Form zweier zusammenwirkender, rotierender Schneidräder oder einer Laserstrahltrenneinrichtung ausgebildet ist.

Ein weiteres Element der Erfindung besteht in einer Optimierung des Formats der bearbeiteten Dekorpapierbahn derart, dass die Längstrenneinrichtung sowie die Quertrenneinrichtungen zum Abtrennen der einzelnen Dekorpapierbahnabschnitte von den Dekorpapierlängsbahnen derart betrieben werden, möglichst wenig Abfall entsteht, d.h., dass die Dekorpapierbahn möglichst vollständig zur Herstellung von Dekorpapierbahnabschnitten mit entsprechenden Formaten verwendet werden kann. Hierzu ist es vorgesehen, dass die Vorrichtung Steuermittel umfasst, die dazu ausgebildet sind, anhand des Formats der Dekorpapierbahn und der Dekorpapierbahnabschnitte die wenigstens eine Längstrenneinrichtung derart in ihrer Position zu verstellen und die Quertrenneinrichtungen derart anzusteuern, dass eine Optimierung der Dekorpapierbahn im Sinne einer möglichst vollständigen, abfallfreien Erzeugung von Dekorpapierbahnabschnitten erfolgt.
In konkreter Ausgestaltung der Steuermittel kann es vorgesehen sein, dass die Steuermittel Speichermittel mit Formaten und Kombinationen von Formaten von Dekorpapierbahnabschnitten umfasst. Das bedeutet, dass in einer Speichereinrichtung der Vorrichtung unterschiedlichste Formate von Dekorpapierbahnabschnitten abgespeichert sind, die mit dem Format einer zu verarbeitenden Papierbahn verglichen werden, derart, dass durch eine optimierte Anordnung der Dekorpapierbahnabschnitte (längs- oder querorientiert zu der Papierbahn bzw. zu der Dekorpapierlängsbahn) eine Optimierung im Sinne eines möglichst geringen Abfalls erzeugt wird.

Das erfindungsgemäße Verfahren zur Konfektionierung von beschichteten Dekorpapierbahnabschnitten mit den Merkmalen des unabhängigen Anspruchs zeichnet sich dadurch aus, dass in einem Bereich vor der wenigstens einen Quertrenneinrichtung die Dekorpapierbahn mittels wenigstens einer Längstrenneinrichtung in wenigstens zwei endlose Dekorpapierlängsbahnen aufgetrennt wird, und dass die wenigstens zwei Dekorpapierlängsbahnen separaten Quertrenneinrichtungen zugeführt werden.

In bevorzugter Weiterbildung des erfindungsgemäßen Verfahrens wird vorgeschlagen, dass die Breite der Dekorpapierbahn im Bereich der Bearbeitungsstrecke wenigstens 50%, vorzugsweise mehr als 75%, besonders bevorzugt zumindest 90% der Auslegungsbreite der Einrichtungen an der Bearbeitungsstrecke aufweist. Ein derartiges Verfahren ermöglicht eine Kostenoptimierung bei der Herstellung der Dekorpapierbahnabschnitte, da die Bearbeitungseinrichtungen im Bereich eines hohen Wirkungsgrads arbeiten sowie der Verbrauch an Hilfsstoffen, bezogen auf eine zu bearbeitende Fläche, minimiert werden kann.

Um zu vermeiden, dass zwischen der Längstrenneinrichtung und den zugeordneten Quertrenneinrichtungen Pufferstrecken zur Zwischenspeicherung der Dekorpapierlängsbahnen erforderlich sind, wird darüber hinaus vorgeschlagen, dass die Dekorpapierlängsbahnen zumindest zwischen der Längstrenneinrichtung und den zugeordneten Quertrenneinrichtungen kontinuierlich gefördert werden. Eine derartige, kontinuierliche Förderung reduziert darüber hinaus auch die mechanische Belastung der Dekorpapierlängsbahnen, da diese im Vergleich zu einer taktweisen Förderung nicht beschleunigt bzw. verzögert werden und somit stets eine konstante Bahnspannung aufweisen können.

Obwohl im Rahmen der nachfolgenden Beschreibung von lediglich zwei Dekorpapierlängsbahnen ausgegangen wird, die aus einer Dekorpapierbahn durch Längstrennen ausgebildet werden, umfasst die Erfindung auch Anwendungen, bei denen mehr als zwei Dekorpapierlängsbahnen aus einer Dekorpapierbahn erzeugt werden. Das bedeutet in der Praxis, dass eine derartige Vorrichtung beispielsweise zwei Längstrenneinrichtungen aufweist, wenn aus einer Dekorpapierbahn drei Dekorpapierlängsbahnen entstehen sollen. Darüber hinaus ist auch ein Anwendungsfall denkbar, bei der zur Kostenoptimierung beispielsweise drei Dekorpapierlängsbahnen erzeugt werden, um ein vorhandenes Format einer Papierbahn optimal nutzen zu können, jedoch eine relativ schmale Dekorpapierlängsbahn als Abfall entsteht, was ggf. preiswerter ist, als ein spezielles Format zur Herstellung zweier Dekorpapierlängsbahnen zu verwenden. Dies ist jeweils vom Anwendungsfall abhängig. Bei der zuletzt genannten Variante sind ebenfalls zwei Längstrenneinrichtungen erforderlich, wobei mittels einer zweiten Längstrenneinrichtung von der Dekorpapierlängsbahn der streifenförmige Abfall abgetrennt wird.

Erfindungsgemäß findet die Vorrichtung bzw. das Verfahren Verwendung zur Erzeugung von Dekorbahnen zur nachfolgenden Beschichtung von Möbelwerkstoffen oder Fußbodenbelägen.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine schematische Darstellung einer erfindungsgemäßen Vorrichtung zur Konfektionierung von beschichteten Dekorpapierbahnabschnitten,
- Fig. 2: einen Schnitt durch eine Umlenkeinrichtung für eine Dekorpapierlängsbahn, wie sie bei einer Vorrichtung gemäß Fig. 1 verwendet wird und
- Fig. 3: in Draufsicht eine Darstellung einer Dekorpapierbahn zur Erläuterung der Anordnung unterschiedlicher Formate von Dekorpapierbahnabschnitten.

Gleiche Elemente bzw. Elemente mit gleicher Funktion sind in den Figuren mit den gleichen Bezugsziffern versehen.

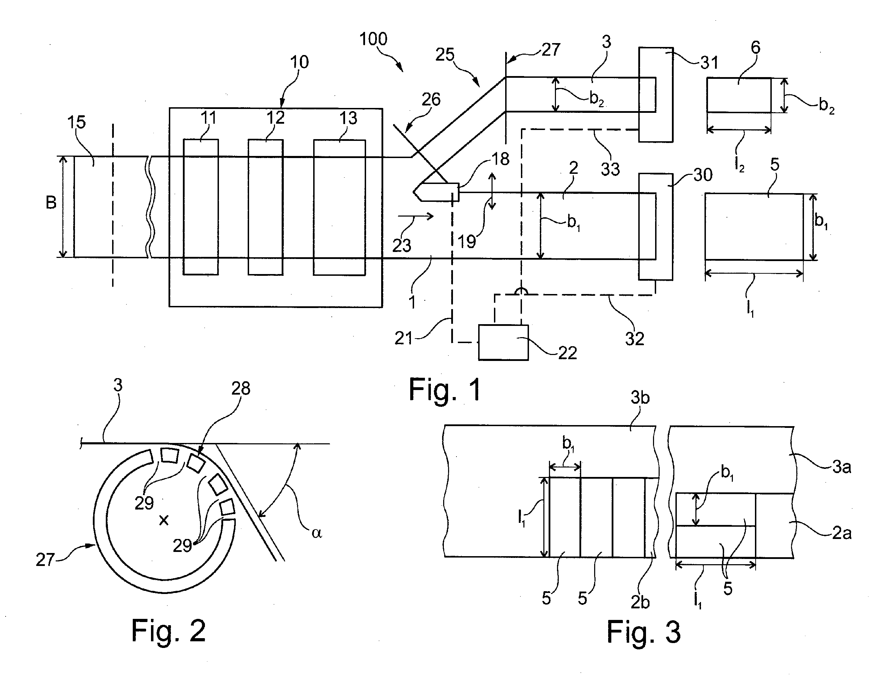

In der Fig. 1 ist eine Vorrichtung 100 zur Konfektionierung von beschichteten Dekorpapierbahnabschnitten 5, 6 stark vereinfacht dargestellt. Die Dekorpapierbahnabschnitten 5, 6 weisen beispielhaft eine unterschiedliche Länge l₁ und l₂ sowie eine unterschiedliche Breite b₁ und b₂ auf. Die Dekorpapierbahnabschnitten 5, 6 entstehen aus Dekorpapierlängsbahnen 2, 3, die die entsprechende Breite b₁ bzw. b₂ aufweisen. Die Dekorpapierlängsbahnen 2, 3 werden wiederum aus einer Dekorpapierbahn 1 erzeugt. Hierzu weist die Vorrichtung 100 entlang einer Bearbeitungsstrecke 10 beispielhaft mehrere Bearbeitungseinrichtungen 11, 12, 13 zum Dekorieren und Imprägnieren einer als Rolle bevorrateten endlosen Papierbahn 15 der Breite B auf, wobei die Breite B der Papierbahn 15 der Summe der Breiten b₁ und b₂ der Dekorpapierlängsbahnen 2, 3 entspricht. Die Papierbahn 15 bzw. die Dekorpapierbahn 1 und die Dekorpapierlängsbahnen 2, 3 werden auf der Vorrichtung 10 mittels an sich bekannter, und daher nicht dargestellter Fördereinrichtungen kontinuierlich gefördert.

An das Ende der Bearbeitungsstrecke 10 bzw. der letzten Bearbeitungseinrichtung 13 schließt sich eine Längstrenneinrichtung 18 an, die die Dekorpapierbahn 1 in die beiden Dekorpapierlängsbahnen 2, 3 auftrennt. Zur Erzeugung unterschiedlicher Breiten b₁ und b₂ der Dekorpapierlängsbahnen 2, 3 ist die Längstrenneinrichtung 18 in Richtung des Doppelpfeils 19 quer zur Längsrichtung der Papierdekorbahn 1 verstellbar angeordnet und beispielhaft über einen nicht dargestellten Verstellantrieb und eine Leitung 21 mit einer Steuereinrichtung 22 der Vorrichtung 100 verbunden.

Während die eine Dekorpapierlängsbahn 2 aus ihrer ursprünglichen Förderrichtung in Richtung des Pfeils 23 nicht umgelenkt wird sondern geradlinig weitergefördert wird, wird die andere Dekorpapierlängsbahn 3 mittels einer Umlenkeinrichtung 25 derart aus ihrer ursprünglichen Richtung umgelenkt, dass die Dekorpapierlängsbahn 3 parallel zur Dekorpapierlängsbahn 2 weitergefördert wird. Hierzu umfasst die Umlenkeinrichtung 25 zwei, in der Fig. 1 lediglich schematisch dargestellte Umlenkzylinder 26, 27, von denen der in Förderrichtung zweite Umlenkzylinder 27 in der Fig. 2 näher dargestellt ist.

Die beiden Umlenkzylinder 26, 27 sind als starr angeordnete Zylinder ausgebildet und lenken die Dekorpapierlängsbahn 3 jeweils um einen Winkel α von ca. 40° bis 90°, vorzugsweise um jeweils 90° aus ihrer jeweiligen Förderrichtung aus. Der Umlenkzylinder 27 weist hierzu eine Führungsfläche 28 auf, die als Mantelfläche des Umlenkzylinders 27 ausgebildet ist, und in der im Wirkkontakt mit der Dekorpapierlängsbahn 3 stehenden Bereich Durchbrüche 29 vorgesehen sind, die mit einer nicht dargestellten Überdruckquelle mit unter Überdruck stehender Luft derart beaufschlagt werden, dass sich zwischen der Führungsfläche 28 und der Dekorpapierlängsbahn 3 ein in der Fig. 2 nicht erkennbares Luftpolster bildet, derart, dass die Dekorpapierlängsbahn 3 nicht an der Führungsfläche 28 anliegt.

Die beiden Dekorpapierlängsbahnen 2, 3 gelangen abschließend in den Bereich zweier Quertrenneinrichtungen 30, 31, die individuell ansteuerbar sind bzw. dazu eingerichtet sind, Dekorpapierbahnabschnitte 5, 6 unterschiedlicher Länge l₁ bzw. l₂ zu erzeugen. Weiterhin sind die beiden Quertrenneinrichtungen 30, 31 über Leitungen 32, 33 ebenfalls mit der Steuereinrichtung 22 verbunden bzw. von dieser ansteuerbar.

Die Steuereinrichtung 22 dient nicht nur der Ansteuerung bzw. Positionierung der Längstrenneinrichtung 18 sowie der Quertrenneinrichtungen 30, 31, sondern weist darüber hinaus bevorzugt ein Programm oder aber abgespeicherte Daten auf, um die einzelnen Dekorpapierbahnabschnitte 5, 6 auf der jeweiligen Dekorpapierlängsbahn 2, 3 optimal zu positionieren bzw. zu orientieren derart, dass eine möglichst abfallfreie Produktion von Dekorpapierbahnabschnitten 5, 6 ermöglicht wird. Hierzu wird auf die Fig. 3 verwiesen, aus der erkennbar ist, dass ein Dekorpapierbahnabschnitt 5 der Breite b₁ und der Länge l₁ entweder durch Anordnen zweier Dekorpapierbahnabschnitte 5 in Längsrichtung nebeneinander oder in Querrichtung nebeneinander möglich ist. Dabei weist die Dekorpapierlängsbahn 2a oder 2b entweder eine Breite von 2xb₁, oder l₁ auf. Abhängig davon, welches Format auf der zweiten Dekorpapierlängsbahn 3a, 3b verarbeitet werden soll, entscheidet die Steuereinrichtung 22, welche der beiden Anordnungen der Dekorpapierbahnabschnitte 5 sinnvoll ist, um insgesamt an den beiden Dekorpapierlängsbahnen 2a, 2b, 3a, 3b möglichst wenig Abfall zu erzeugen bzw. möglichst viele Dekorpapierbahnabschnitte 5, 6 erzeugen zu können.

Die soweit beschriebene Vorrichtung 100 kann in vielfältiger Art und Weise abgewandelt bzw. modifiziert werden, ohne vom Erfindungsgedanken abzuweichen.

### Bezugszeichen

- 1: Dekorpapierbahn
- 2: Dekorpapierlängsbahn
- 3: Dekorpapierlängsbahn
- 5: Dekorpapierbahnabschnitt
- 6: Dekorpapierbahnabschnitt

- 10: Bearbeitungsstrecke
- 11: Bearbeitungseinrichtung
- 12: Bearbeitungseinrichtung
- 13: Bearbeitungseinrichtung

- 15: Papierbahn

- 18: Längstrenneinrichtung
- 19: Doppelpfeil

- 21: Leitung
- 22: Steuereinrichtung
- 23: Pfeil

- 25: Umlenkeinrichtung
- 26: Umlenkzylinder
- 27: Umlenkzylinder
- 28: Führungsfläche
- 29: Durchbruch
- 30: Quertrenneinrichtung
- 31: Quertrenneinrichtung
- 32: Leitung
- 33: Leitung

- B: Breite
- b₁, b₂: Breite

- l₁, l₂: Länge

- α: Winkel

- 100: Vorrichtung

## Patentansprüche

1. Vorrichtung (100) zur Konfektionierung von beschichteten Dekorpapierbahnabschnitten (5, 6), mit einer Bearbeitungsstrecke (10) mit Einrichtungen (11 bis 13) zum Dekorieren und Imprägnieren einer endlosen Papierbahn (15) zu einer Dekorpapierbahn (1) und wenigstens einer Quertrenneinrichtung (30, 31) zum Abtrennen von Dekorpapierbahnabschnitten (5, 6) definierter Länge (l₁, l₂) von der Dekorpapierbahn (1),
**dadurch gekennzeichnet,**
**dass** in Förderrichtung vor der wenigstens einen Quertrenneinrichtung (30, 31) wenigstens eine Längstrenneinrichtung (18) zum Auftrennen der Dekorpapierbahn (1) in wenigstens zwei endlose Dekorpapierlängsbahnen (2, 3) angeordnet ist, und dass wenigstens eine Umlenkeinrichtung (25) vorgesehen ist, die die beiden Dekorpapierlängsbahnen (2, 3) zueinander beabstandet und jeweils einer separaten Quertrenneinrichtung (30, 31) zuführt.

2. Vorrichtung nach Anspruch 1,
**dadurch gekennzeichnet,**
**dass** die wenigstens eine Umlenkeinrichtung (25) dazu eingerichtet ist, die wenigstens zwei Dekorpapierlängsbahnen (2, 3) zwischen der Längstrenneinrichtung (18) und den Quertrenneinrichtungen (30, 31) parallel zueinander auszurichten.

3. Vorrichtung nach Anspruch 2,
**dadurch gekennzeichnet,**
**dass** die wenigstens eine Umlenkeinrichtung (25) zwei voneinander beabstandete Umlenkelemente (26, 27) aufweist, die eine Dekorpapierlängsbahn (3) um jeweils ca. 40° bis 90°, vorzugsweise um 90° aus ihrer Förderrichtung auslenken.

4. Vorrichtung nach Anspruch 3,
**dadurch gekennzeichnet,**
**dass** das Umlenkelement (26, 27) ein gewölbt ausgebildete Führungsfläche (28) für die Dekorpapierlängsbahn (3), insbesondere an einem in einer Achse starr angeordneten Umlenkzylinder, umfasst, und dass im Bereich der Führungsfläche (28) ein Luftpolster zum berührungslosen Umlenken der Dekorpapierlängsbahn (3) ausgebildet ist.

5. Vorrichtung nach Anspruch 4,
**dadurch gekennzeichnet,**
**dass** die Führungsfläche (28) Durchbrüche (29) zur Durchströmung mit unter Überdruck stehender Luft aufweist, die auf der der Dekorpapierlängsbahn (3) abgewandten Seite in Wirkverbindung mit einer Überdruckquelle angeordnet sind.

6. Vorrichtung nach einem der Ansprüche 1 bis 5,
**dadurch gekennzeichnet,**
**dass** die wenigstens eine Längstrenneinrichtung (18) und die wenigstens eine Umlenkeinrichtung (25) in einer Richtung quer zur Längsrichtung der Dekorpapierbahn (1) verstellbar angeordnet sind.

7. Vorrichtung nach einem der Ansprüche 1 bis 6,
**dadurch gekennzeichnet,**
**dass** die Längstrenneinrichtung (18) in Form zweier zusammenwirkender, rotierender Schneidräder oder einer Laserstrahltrenneinrichtung ausgebildet ist.

8. Vorrichtung nach einem der Ansprüche 1 bis 7,
**dadurch gekennzeichnet,**
**dass** Steuermittel (22) vorgesehen sind, die dazu ausgebildet sind, anhand des Formats der Dekorpapierbahn (1) und der Dekorpapierbahnabschnitte (5, 6) die wenigstens eine Längstrenneinrichtung (18) derart in ihrer Position zu verstellen und die Quertrenneinrichtungen (30, 31) derart anzusteuern, dass eine Optimierung der Dekorpapierbahn (1) im Sinne eine möglichst vollständigen, abfallfreien Erzeugung von Dekorpapierbahnabschnitten (5, 6) erfolgt.

9. Vorrichtung nach Anspruch 8,
**dadurch gekennzeichnet,**
**dass** die Steuermittel (22) Speichermittel mit Kombinationen von Formaten von Dekorpapierbahnabschnitten (5, 6) umfasst.

10. Verfahren zur Konfektionierung von beschichteten Dekorpapierbahnabschnitten (5, 6), bei dem entlang einer Bearbeitungsstrecke (10) eine endlose Papierbahn (15) zunächst dekoriert und imprägniert wird, und anschließend Dekorpapierbahnabschnitte (5, 6) definierter Länge (l₁, l₂) von einer Dekorpapierbahn (1) mittels wenigstens einer Quertrenneinrichtung (30, 31) abgetrennt werden,
**dadurch gekennzeichnet,**
**dass** in einem Bereich vor der wenigstens einen Quertrenneinrichtung (30, 31) die Dekorpapierbahn (1) mittels wenigstens einer Längstrenneinrichtung (18) in wenigstens zwei endlose Dekorpapierlängsbahnen (2, 3) aufgetrennt wird, und dass die wenigstens zwei Dekorpapierlängsbahnen (2, 3) separaten Quertrenneinrichtungen (30, 31) zugeführt werden.

11. Verfahren nach Anspruch 10,
**dadurch gekennzeichnet,**
**dass** die Breite (B) der Dekorpapierbahn (1) im Bereich der Bearbeitungsstrecke (10) wenigstens 50%, vorzugsweise mehr als 75%, besonders bevorzugt zumindest 90% der Auslegungsbreite der Einrichtungen (11 bis 13) an der Bearbeitungsstrecke (10) aufweist.

12. Verfahren nach Anspruch 10 oder 11,
**dadurch gekennzeichnet,**
**dass** die Dekorpapierlängsbahnen (2, 3) zumindest zwischen der Längstrenneinrichtung (18) und den zugeordneten Quertrenneinrichtungen (30, 31) kontinuierlich gefördert werden.

13. Verwendung einer Vorrichtung (100) nach einem der Ansprüche 1 bis 9 zur Erzeugung von Dekorpapierbahnabschnitten (5, 6) zur Beschichtung von Möbelwerkstoffen oder Fußbodenbelägen.

## Claims

1. A device (100) for packaging coated décor paper web sections (5, 6), with a processing segment (10) having devices (11 to 13) for decorating and impregnating a continuous paper web (15) to yield a décor paper web (1) and at least one transverse cutting unit (30, 31) for separating décor paper web sections (5, 6) of a defined length (l₁, l₂) from the décor paper web (1),
**characterized in that**
at least one longitudinal cutting unit (18) for cutting the décor paper web (1) into at least two continuous longitudinal décor paper webs (2, 3) is situated in front of the at least one transverse cutting unit (30, 31) in the conveying direction, and that at least one reversing device (25) is provided, which spaces the two longitudinal décor paper webs (2, 3) apart from each other and relays them to a respectively separate transverse cutting unit (30, 31).

2. The device according to claim 1, **characterized in that** the at least one reversing device (25) is set up to align the at least two longitudinal décor paper webs (2, 3) parallel to each other between the longitudinal cutting unit (18) and transverse cutting units (30, 31).

3. The device according to claim 2, **characterized in that** the at least one reversing device (25) exhibits two spaced apart reversing elements (26, 27), which deflect a longitudinal décor paper web (3) out of its conveying direction by a respective approx. 40° to 90°, preferably by 90°.

4. The device according to claim 3, **characterized in that** the reversing element (26, 27) encompasses a curved guiding surface (28) for the longitudinal décor paper web (3), in particular on a reversing cylinder rigidly arranged in an axis, and that an air cushion for continuously reversing the longitudinal décor paper web (3) is formed in the area of the guiding surface (28).

5. The device according to claim 4, **characterized in that** the guiding surface (28) exhibits openings (29) for air exposed to an excess pressure to flow through, which are arranged on the side facing away from the longitudinal décor paper web (3) so as to operatively interact with an overpressure source.

6. The device according to one of claims 1 to 5, **characterized in that** the at least one longitudinal cutting unit (18) and at least one reversing device (25) are arranged so as to be adjustable in a direction transverse to the longitudinal direction of the décor paper web (1).

7. The device according to one of claims 1 to 6, **characterized in that** the longitudinal cutting unit (18) is designed in the form of two interacting, rotating cutting wheels or a laser beam cutting unit.

8. The device according to one of claims 1 to 7, **characterized in that** control means (22) are provided that are designed to shift the position of the at least one longitudinal cutting unit (18) and actuate the transverse cutting units (30, 31) in such a way based on the format of the décor paper web (1) and décor paper web sections (5, 6) as to optimize the décor paper web (1), so that décor paper web sections (5, 6) can be generated as completely and waste-free as possible.

9. The device according to claim 8, **characterized in that** the control means (22) encompass storage means with combinations of formats for decorative paper web sections (5, 6).

10. A method for packaging coated décor paper web sections (5, 6), in which a continuous paper web (15) is first decorated and impregnated along a processing segment (10), after which décor paper web sections (5, 6) of a defined length (l₁, l₂) are separated from a decorative paper web (1) by means of at least one transverse cutting unit (30, 31),
**characterized in that**
the décor paper web (1) is cut into at least two continuous longitudinal décor paper webs (2, 3) in an area in front of the at least one transverse cutting unit (30, 31) by means of a longitudinal cutting unit (18), and that the at least two longitudinal décor paper webs (2, 3) are relayed to separate transverse cutting units (30, 31).

11. The method according to claim 10, **characterized in that** the width (B) of the décor paper web (1) in the area of the processing segment (10) exhibits at least 50%, preferably more than 75%, especially preferably at least 90% of the design width of the devices (11 to 13) on the processing segment (10).

12. The method according to claim 10 or 11, **characterized in that** the longitudinal décor paper webs (2, 3) are continuously conveyed at least between the longitudinal cutting unit (18) and the allocated transverse cutting units (30, 31).

13. Use of a device (100) according to one of claims 1 to 9 for generating décor paper web sections (5, 6) to coat furniture materials or floor coverings.

## Revendications

1. Dispositif (100) pour la fabrication de tronçons de bande de papier décoratif revêtue (5, 6), comportant une section de traitement (10) équipée de dispositifs (11 à 13) pour décorer et imprégner une bande de papier sans fin (15) en une bande de papier décoratif (1) et d'au moins un dispositif de coupe transversale (30, 31) pour découper des tronçons de bande de papier décoratif (5, 6) de longueur définie (l₁, l₂) à partir de la bande de papier décoratif (1), **caractérisé en ce qu'**au moins un dispositif de coupe longitudinale(18) est disposé avant ledit au moins un dispositif de coupe transversale (30, 31) dans la direction de transport, pour découper la bande de papier décoratif (1) en au moins deux bandes longitudinales de papier décoratif sans fin (2, 3), et **en ce qu'**il est prévu au moins un dispositif de renvoi (25) qui écarte l'une de l'autre les deux bandes longues de papier décoratif (2, 3) et les envoie respectivement à un dispositif de coupe transversale séparé (30, 31).

2. Dispositif selon la revendication 1, **caractérisé en ce que** ledit au moins un dispositif de renvoi (25) est conçu pour orienter parallèlement l'une à l'autre lesdites au moins deux bandes longitudinales de papier décoratif (2, 3) entre le dispositif de coupe longitudinale (18) et les dispositifs de coupe transversale (30, 31).

3. Dispositif selon la revendication 2, **caractérisé en ce que** ledit au moins un dispositif de renvoi (25) présente deux éléments de renvoi espacés l'un de l'autre (26, 27), qui renvoient une bande longitudinale de papier décoratif (3) respectivement d'environ 40° à 90°, de préférence de 90° à partir de sa direction de transport.

4. Dispositif selon la revendication 3, **caractérisé en ce que** l'élément de renvoi (26, 27) comprend une face de guidage (28) de forme bombée pour la bande longitudinale de papier décoratif (3), en particulier sur un cylindre de renvoi disposé de façon fixe sur un axe, et **en ce qu'**un coussin d'air est formé dans la région de la face de guidage (28) pour le renvoi sans contact de la bande longitudinale de papier décoratif (3).

5. Dispositif selon la revendication 4, **caractérisé en ce que** la face de guidage (28) présente des ouvertures (29) pour le passage d'air se trouvant en surpression, qui sont disposées sur le côté situé à l'opposé de la bande longitudinale de papier décoratif (3) en communication active avec une source de surpression.

6. Dispositif selon l'une quelconque des revendications 1 à 5, **caractérisé en ce que** ledit au moins un dispositif de coupe longitudinale (18) et ledit au moins un dispositif de renvoi (25) sont disposés de façon réglable dans une direction transversale à la direction longitudinale de la bande de papier décoratif (1).

7. Dispositif selon l'une quelconque des revendications 1 à 6, **caractérisé en ce que** le dispositif de coupe longitudinale (18) est réalisé sous la forme de deux roues de coupe rotatives qui coopèrent ou d'un dispositif de coupe au faisceau laser.

8. Dispositif selon l'une quelconque des revendications 1 à 7, **caractérisé en ce qu'**il est prévu des moyens de commande (22), qui sont conçus pour régler la position dudit au moins un dispositif de coupe longitudinale (18) et pour commander les dispositifs de coupe transversale (30, 31) en fonction du format de la bande de papier décoratif (1) et des tronçons de bande de papier décoratif (5, 6), de telle manière qu'il en résulte une optimisation de la bande de papier décoratif (1) dans le sens d'une production aussi complète que possible et sans déchets de tronçons de bande de papier décoratif (5, 6).

9. Dispositif selon la revendication 8, **caractérisé en ce que** les moyens de commande (22) comprennent des moyens de mémoire avec des combinaisons de formats de tronçons de bande de papier décoratif (5, 6).

10. Procédé pour la fabrication de tronçons de bande de papier décoratif revêtue (5, 6), dans lequel on décore et on imprègne d'abord une bande de papier décoratif sans fin (15) le long d'une section de traitement (10), et on découpe ensuite des tronçons de bande de papier décoratif (5, 6) de longueur définie (l₁, l₂) à partir d'une bande de papier décoratif (1) au moyen d'au moins un dispositif de coupe transversale (30, 31), **caractérisé en ce que** l'on découpe la bande de papier décoratif (1) en au moins deux bandes longitudinales de papier décoratif (2, 3) au moyen d'au moins un dispositif de coupe longitudinale (18), dans une région située avant ledit au moins un dispositif de coupe transversale (30, 31), et **en ce que** l'on envoie lesdites au moins deux bandes longitudinales de papier décoratif (2, 3) à des dispositifs de coupe transversale séparés (30, 31).

11. Dispositif selon la revendication 10, **caractérisé en ce que** la largeur (B) de la bande de papier décoratif (1) présente, dans la région de la section de traitement (10), au moins 50 %, de préférence plus de 75 %, et de préférence encore au moins 90 % de la largeur de conception des dispositifs (11 à 13) à la section de traitement (10).

12. Procédé selon la revendication 10 ou 11, **caractérisé en ce que** l'on transporte les bandes longitudinales de papier décoratif (2, 3) en continu au moins entre le dispositif de coupe longitudinale (18) et les dispositifs de coupe transversale associés (30, 31).

13. Utilisation d'un dispositif (100) selon l'une quelconque des revendications 1 à 9 pour la production de tronçons de bande de papier décoratif (5, 6) pour le revêtement de matériaux destinés à des meubles ou à des revêtements de sol.
